# EUROPÄISCHE PATENTSCHRIFT

(11) **EP 3 389 956 B1**
(45) Veröffentlichungstag und Bekanntmachung des Hinweises auf die Patenterteilung: **12.01.2022**
(21) Anmeldenummer: 16819464.5
(22) Anmeldetag: 12.12.2016
(51) Int. Cl.: B25J 13/06

(54) **BEDIENGERÄT ZUM STEUERN ODER PROGRAMMIEREN EINES MANIPULATORS**
OPERATING DEVICE FOR CONTROLLING OR PROGRAMMING A MANIPULATOR
APPAREIL DE COMMANDE DESTINÉ À LA COMMANDE OU PROGRAMMATION D'UN MANIPULATEUR

(30) Priorität: 18.12.2015 DE 202015008715 U
(43) Veröffentlichungstag der Anmeldung: 24.10.2018
(73) Patentinhaber: KUKA Deutschland GmbH, 86165 Augsburg (DE)
(72) Erfinder: RIEDEL, Martin, 86165 Augsburg (DE)
(74) Vertreter: Mader, Joachim
(86) Internationale Anmeldenummer: PCT/EP2016/080620
(87) Internationale Veröffentlichungsnummer: WO 2017/102638

(56) Entgegenhaltungen:
- EP-A2- 2 012 208
- US-A- 5 271 290
- US-A1- 2007 282 483
- US-B1- 6 424 077

## Beschreibung

### 1. Technischer Bereich

Die vorliegende Erfindung betrifft ein Bediengerät zum Steuern oder Programmieren eines Manipulators und ein entsprechendes Manipulatorsystem, wobei der Manipulator sechs unabhängig voneinander ansteuerbare Freiheitsgrade hat.

### 2. Technischer Hintergrund

Manipulatoren, und insbesondere Roboter, sind universell einsetzbare, freiprogrammierbare Handhabungsgeräte. Beispielsweise kann ein Manipulator mehrere Achsen umfassen, die unabhängig voneinander durch Motoren bewegbar sind. Hierdurch kann der Manipulator verschiedene Posen bzw. Konfigurationen einnehmen, um mit seinem Werkzeug oder Werkzeugmittelpunkt (engl.: "Tool Center Point", TCP) verschiedene Positionen im Raum erreichen zu können.

Ein Manipulator kann dabei mehrere Freiheitsgrade aufweisen. Diese können die Anzahl von voneinander unabhängigen, angetriebenen Bewegungen beschreiben, die der Manipulator im Raum gegenüber einem festen Weltkoordinatensystem ausführen kann. Die Freiheitsgrade charakterisieren somit die Beweglichkeit des Manipulators.

Prinzipiell können sich viele Manipulatoren auf zwei verschiedene Arten in einem Koordinatensystem bewegen: Einerseits kann der Manipulator oder TCP entlang einer der drei kartesischen Raumrichtungen bewegt werden, und somit eine geradlinige Translation durchführen. Die Hauptlinearachsen des Manipulators sind dabei üblicherweise parallel zu den kartesischen Richtungen des Bezugskoordinatensystems. Ferner kann eine Rotation um jeweils eine dieser Achsen erfolgen.

Ein Manipulator kann einem automatischen Programmablauf folgen. Hierzu wird einer entsprechenden Steuerung ein vorher programmierter Programmablauf bereitgestellt, welcher die einzelnen Bahnpunkte beschreibt, die durch den Manipulator abgefahren werden sollen. Ferner ist auch ein manueller Betrieb möglich, bei dem der Bediener den Manipulator manuell verfahren kann. Hierzu kann beispielsweise ein Bediengerät verwendet werden, welches frei-belegbare Tasten aufweisen kann, die bei Betätigung eine kontinuierliche oder schrittartige Bewegung des Manipulators bewirken. Ein solches Bediengerät ist beispielsweise in dem Dokument DE 4303264 C2 beschrieben.

Viele Bediengeräte sind jedoch kompliziert, und erlauben häufig nur eine unpräzise Bewegung des Manipulators. Vor allem für ungeübte Nutzer, die selten Manipulatoren bedienen, ist der Umgang mit solchen Bediengeräten herausfordernd. Insbesondere ist es für den Bediener oft nicht ersichtlich, wie eine gewünschte Translation und/oder Rotation mit dem Bediengerät vorgegeben bzw. durchgeführt werden kann.

Das Dokument US 2007/0282483 A1 offenbart ein robotisches Masterbediengerät, das eine Reihe von Elementen aufweist, die durch Schwenklager miteinander verbunden sind, und ein Handgriff, mit eingebauten Relativpositionssensoren, die Gierung und Neigung des Handgriffs aufgrund einer Bewegung durch den Benutzer detektieren.

Das Dokument US 6,424,077 B1 offenbart einen Mikromanipulator, der dazu verwendet wird, ein mikroskopisches Objekt bei der mikroskopischen Manipulation von Zellen, der Herstellung von feinen Bauteilen oder ähnlichem in eine beliebige Position zu bringen.

Das Dokument US 5,271,290 A offenbart eine Aktuatoranordnung zur Verwendung mit einer Parallelplatformstruktur, wie beispielsweise einem Handbediengerät. Die Aktuatoranordnung umfasst ein Paar von Armen, wobei jeder Arm obere und untere Armabschnitte aufweist, die schwenkbar miteinander verbunden sind.

Es ist somit eine Aufgabe der vorliegenden Erfindung, ein Bediengerät bereitzustellen, welches die manuelle Bedienung eines Manipulators deutlich vereinfacht. Insbesondere soll die Bewegung des Manipulators höchst präzise und definiert vorgegeben werden.

Diese und weitere Aufgaben, die aus der folgenden Beschreibung ersichtlich werden, werden durch ein Bediengerät gemäß Anspruch 1 und ein Manipulator-System gemäß Anspruch 10 gelöst.

### 3. Inhalt der Erfindung

Die vorliegende Erfindung betrifft ein Bediengerät zum Steuern oder Programmieren eines Manipulators. Das Bediengerät kann manuell durch einen Bediener bedient werden. Beispielsweise kann das Bediengerät händisch durch den Bediener bedient werden. Das Bediengerät kann dabei die Steuerung des Manipulators in verschiedenen Koordinatensystemen ermöglichen, aber auch für die Erstellung von Programmabläufen verwendet werden. Hierzu kann das Bediengerät beispielsweise in Kommunikation mit einer entsprechenden Steuerung des Manipulators stehen, und Bewegungsvorgaben an die Steuerung vorgeben, welche anschließend von der Steuerung umgesetzt werden können. Der Manipulator hat sechs unabhängig voneinander ansteuerbare Freiheitsgrade. Eine gewünschte Bewegungsführung eines Werkzeugs des Manipulators, zum Beispiel, kann dabei in eine translatorische (Position des Werkzeugs) und rotatorische (Orientierung des Werkzeugs) Bewegungsvorgabe aufgeteilt werden.

Das Bediengerät weist eine erste Eingabeanordnung auf, die eingerichtet, um eine Bewegung des Manipulators entlang einer x-Achse des Manipulators vorzugeben und um eine Rotation des Manipulators um die x-Achse des Manipulators vorzugeben. Ferner ist die erste Eingabeanordnung entlang einer ersten Hauptachse des Bediengeräts ausgerichtet.

Ferner weist das Bediengerät eine zweite Eingabeanordnung auf. Diese ist eingerichtet, um eine Bewegung des Manipulators entlang einer y-Achse des Manipulators vorzugeben und um eine Rotation des Manipulators um die y-Achse des Manipulators vorzugeben. Die zweite Eingabeanordnung ist entlang einer zweiten Hauptachse des Bediengeräts ausgerichtet.

Ferner weist das Bediengerät eine dritte Eingabeanordnung auf. Diese ist eingerichtet, um eine Bewegung des Manipulators entlang einer z-Achse des Manipulators vorzugeben und um eine Rotation des Manipulators um die z-Achse des Manipulators vorzugeben. Die dritte Eingabeanordnung ist entlang einer dritten Hauptachse des Bediengeräts ausgerichtet.

Der Fachmann versteht dabei, dass die Bewegung des Manipulators entlang einer der x-, y- oder z-Achse als translatorische Bewegung vorliegen kann, welche keine Drehung oder Rotation umfasst.

Die x-Achse, y-Achse und z-Achse des Manipulators sind orthogonal zueinander. Dabei sind die x-Achse, y-Achse und z-Achse des Manipulators insbesondere im Rechtssystem orthogonal zueinander. Ferner sind die Hauptachsen des Bediengeräts im Wesentlichen rechtwinklig zueinander.

Die Eingabeanordnungen können somit entsprechend ihrer Wirkbewegung im kartesischen Raum an dem Bediengerät in Form einen Koordinatensystems angeordnet und ausgerichtet sein. Die dritte Eingabeanordnung, die zur translatorischen Verstellung des Manipulators in z-Richtung eingerichtet ist, ist beispielsweise so angeordnet, dass diese dritte Eingabeanordnung eindeutig visuell durch den Bediener in Verbindung mit der z-Achse gebracht wird. Durch Betätigung der dritten Eingabeanordnung kann beispielsweise eine positive z-Bewegung des Manipulators vorgegeben werden. Die eindeutige Zuordnung basiert auf der im Wesentlichen rechtwinkligen Anordnung der dritten Eingabeanordnung relativ zu der ersten und zweiten Eingabeanordnung.

Die Anordnung der Eingabeanordnungen entlang der im Wesentlichen rechtwinklig zueinander liegenden drei Hauptachsen des Bediengeräts ermöglicht es dem Bediener, einen mehrachsigen Manipulator in allen Freiheitsgraden intuitiv verfahren können. Die spezielle Anordnung der Eingabeanordnungen reduziert Bedienfehler, wie z. B. die Verwechselungsgefahr der Bewegungsrichtungen bzw. Bewegungsorientierung auf ein Minimum. Die resultierenden Bewegungen des Manipulators sind sehr gut vorhersehbar und steuerbar.

Vorzugsweise entspricht die Hauptachsenanordnung des Bediengeräts der x-, der y- und z-Achsenanordnung des Manipulators. Es ist für den Bediener nicht nur direkt ersichtlich, welche Eingabeanordnung welchen Freiheitsgrad des Manipulators betrifft, sondern auch welche Bewegungsrichtung bei Betätigung real resultiert. Eine Verwechslung der Achsen sowie der Bewegungsrichtungen wird auf ein Minimum begrenzt.

Vorzugsweise ist die erste Eingabeanordnung in einem länglich ausgebildeten ersten Gehäuse bereitgestellt. Dieses Gehäuse erstreckt sich entlang der ersten Hauptachse des Bediengeräts. Die zweite Eingabeanordnung ist vorzugsweise in einem länglich ausgebildeten zweiten Gehäuse bereitgestellt. Dieses zweite Gehäuse erstreckt sich entlang der zweiten Hauptachse des Bediengeräts. Die dritte Eingabeanordnung ist vorzugsweise in einem länglich ausgebildeten dritten Gehäuse bereitgestellt. Dieses dritte Gehäuse erstreckt sich dabei entlang der dritten Hauptachse des Bediengeräts. Die drei länglich ausgebildeten Gehäuse, die im Wesentlichen rechtwinklig zueinander liegen, verdeutlichen somit eindeutig dem Bediener die Form des orthogonalen Koordinatensystems, welches dem Bediengerät bzw. der Steuerung des Manipulators zugrunde liegt.

Der einfache Grundaufbau des Bediengeräts ermöglicht dabei eine kostengünstige Steuerung des Manipulators. Das Manipulator-Koordinatensystem mit seinen dazugehörigen Bewegungen ist für den Benutzer intuitiv begreifbar und sicher kontrollierbar.

Die erste, zweite und dritte Eingabeanordnung umfasst jeweils ein betätigbares Bewegungsvorgabeelement, welches eingerichtet ist, um die Bewegung des Manipulators vorzugeben, und ein betätigbares Rotationsvorgabeelement, welches eingerichtet ist, um die Rotation des Manipulators vorzugeben. Entlang jeder der drei Hauptachsen des Bediengeräts befinden sich somit ein Bewegungsvorgabeelement und ein Rotationsvorgabeelement. Mit diesen Vorgabeelementen kann jeweils die Bewegung des Manipulators entlang der x-, y- und z- Achse, also eine Translation, und die Rotation um diese Achsen vorgegeben werden. Durch die spezielle Anordnung der Vorgabeelemente kann der Bediener direkt und intuitiv erkennen, wie eine gewünschte Bewegung oder Rotation des Manipulators erfolgt. Insbesondere vorzugsweise kann eines oder mehrere der Bewegungsvorgabelelemente bzw. Rotationsvorgabeelemente vollständig oder teilweise abgedeckt werden. Ein Bediener kann somit das entsprechende Vorgabelelement nicht oder nicht weniger leicht erreichen und betätigen. Die Abdeckung oder der Grad der Abdeckung kann manuell oder automatisch verändert werden. Somit kann die Eindeutigkeit der Bedienrichtung sichergestellt werden, indem bestimmte Vorgabeelemente abgedeckt werden.

Insbesondere vorzugsweise ist jedes der betätigbaren Bewegungsvorgabeelemente drehbar betätigbar. Insbesondere vorzugsweise ist jedes der betätigbaren Rotationsvorgabeelemente drehbar betätigbar. Die Bewegungs- und Rotationsvorgabeelemente können beispielsweise zylindrisch ausgeführt sein, etwa als Ring, Rad oder Zylinder. Die Mantelflächen dieser Vorgabeelemente können für die Betätigung durch den Bediener zumindest teilweise frei zugänglich sein.

Vorzugsweise ist das Bediengerät zwischen einem Fein-Modus und einem Grob-Modus umschaltbar. In dem Grob-Modus sind die betätigbaren Bewegungsvorgabeelemente und die betätigbaren Rotationsvorgabeelemente freilaufend betätigbar. In dem Fein-Modus wirkt eine Rasterung dieser freilaufenden Betätigung entgegen.

Der Fein-Modus beschreibt somit einen Präzisionsbetrieb. Ein beispielsweise als Zylinder ausgeführtes Vorgabeelement kann durch eine rastende Funktion abgebremst werden. Jedes Weiterdrehen in die nächste Rasterung bewirkt eine definierte Schrittbewegung des Roboters, beispielsweise eine Schrittbewegung von 1 mm oder eine Rotation um 1°. Diese Empfindlichkeit kann vom Benutzer vorgegeben bzw. ausgewählt werden. In diesem Fein-Modus sind damit sehr genaue, präzise Bewegungen möglich. Die Rasterung kann beispielsweise durch elektromagnetische Einwirkung auf die Vorgabeelemente selektiv aktiviert werden.

Der Grob-Modus eignet sich zum weitläufigen Verfahren des Manipulators. Das Umschalten zwischen dem Fein-Modus und dem Grob-Modus kann beispielsweise durch Tastendruck erfolgen. Dadurch kann die Rasterung der Vorgabeelemente aufgehoben werden. Die Vorgabeelemente sind nun freilaufend betätigbar, und können beispielsweise leichtgängig durchdrehen. Wenn der Manipulator durch Drehen eines der Vorgabeelemente in Bewegung gesetzt wird, kann dieser beispielsweise entsprechend verfahren, so lange die Drehung erfolgt. Die Drehung kann auch trägheitsbedingt ohne weitere aktive Einwirkung des Bedieners weiterlaufen. Alternativ kann durch ein schnelles Andrehen des Vorgabeelements eine kontinuierliche Bewegung des Manipulators eingeleitet werden. Durch ein kurzes Antippen des entsprechenden Vorgabeelements kann die Bewegung beispielsweise gestoppt werden.

Die Geschwindigkeit des Manipulators kann dabei bis zur maximalen Verfahrgeschwindigkeit des Manipulators abhängig von der Geschwindigkeit des Vorgabeelements selber sein. Somit kann der Manipulator effizient und ohne große Anstrengungen des Bedieners definiert an eine weit entfernte Position oder Pose gefahren werden.

Da sich die in drei Koordinatenrichtungen angeordneten Eingabeanordnungen auf ein fest definiertes Koordinatensystem beziehen, kann vom Bediener vorzugsweise explizit ausgewählt werden, welches Koordinatensystem zu verwenden ist. Hierzu kann beispielsweise ein ortsfestes Koordinatensystem, wie beispielsweise das sogenannte Basiskoordinatensystem, Weltkoordinatensystem, oder Roboterfußkoordinatensystem gewählt werden. Andernfalls kann auch ein mitbewegtes Koordinatensystem, wie beispielsweise das Flanschkoordinatensystem oder Werkzeugkoordinatensystem ausgewählt werden. Vorteilhafterweise hält der Bediener das Bediengerät derart, dass die gewählten Koordinatenrichtungen und die Orientierung des Bediengeräts ungefähr übereinstimmen.

Vorzugsweise weist das Bediengerät einen Handgriff auf. Ein Bediener kann mit einer Hand den Handgriff greifen und mit der anderen Hand die Eingabeanordnungen bedienen. Vorzugsweise sind die erste, zweite und dritte Eingabeanordnung gemeinsam relativ zu dem Handgriff beweglich bereitgestellt. Die drei Eingabeanordnungen, die unbeweglich bzw. starr relativ zueinander sein können, können dabei beispielsweise drehbar mit dem Handgriff verbunden sein. Durch Drehen der Eingabeanordnungen relativ zu dem Handgriff kann ein Bediener die Richtung bzw. Ausrichtung der Eingabeanordnung gezielt auf die gewünschte Koordinatenrichtung einstellen, die an dem Manipulator vorliegt. Dadurch kann der Komfort der intuitiven Eingabe weiterhin beibehalten werden. Die Orientierung der Eingabeanordnungen relativ zum Handgriff kann beispielsweise nach dem Verstellen fixiert werden.

Vorzugsweise weist das Bediengerät neben dem Handgriff eine 6D-Sensorvorrichtung auf. Diese 6D-Sensorvorrichtung ist dabei zwischen dem Handgriff und den Eingabeanordnungen bereitgestellt, und eingerichtet, um eine Relativbewegung zwischen dem Handgriff und einer der Eingabeanordnungen zu erfassen. Ein Bediener kann somit beispielsweise eine oder mehrere Eingabeanordnung(en) relativ zum Handgriff nach vorne drücken. Die resultierende Kraft kann durch die 6D-Sensorvorrichtung erfasst werden, und es kann an die Steuerung des Manipulators eine entsprechende Translation des Manipulators vorgegeben werden. Dadurch kann eine mehrdimensionale Bewegung des Manipulators leicht erfolgen. Anschließend kann der Benutzer die Bewegungs- und Rotationsvorgabeelemente betätigen, um eine genaue Bewegung des Manipulators an die gewünschte Zielposition vorzugeben. Die 6D-Sensorvorrichtung kann beispielsweise auf Dehnmessstreifen basieren.

Vorzugsweise weist das Bediengerät weiterhin eine 3D-Inertialsensorvorrichtung auf. Diese ist eingerichtet, um eine absolute Ausrichtung und Orientierung des Bediengeräts bezüglich der Umgebung zu erfassen. Mit der 3D-Inertialsensorvorrichtung kann beispielsweise die vom Bediener frei festgelegte x-Ausrichtung des Bediengeräts erfasst werden. Diese kann der Steuerung des Manipulators bereitgestellt werden. Eine Bewegungsvorgabe mit dem Bediengerät entlang dieser frei festgelegten x-Ausrichtung kann somit in eine analoge Bewegung des Manipulators in dieselbe Richtung umgesetzt werden. Ein Abgleichen der Koordinatensysteme durch den Benutzer ist somit nicht mehr notwendig.

Das Bediengerät kann beispielsweise als Handbediengerät ausgestaltet sein, und weitere manipulatorspezifische bzw. sicherheitsrelevante Bedientasten aufweisen. Beispielsweise kann das Bediengerät ein oder mehrere Nothalt- und/oder Zustimmschalter aufweisen. Das Bediengerät kann kabellos oder kabelgebunden bereitgestellt sein. Ferner kann das Bediengerät über ein Kopplungsmittel mit anderen Geräten gekoppelt werden. Beispielsweise kann das Bediengerät mit einem Smartphone oder anderen (Manipulator-)Steuerungen gekoppelt werden. Somit ist das Bediengerät universell einsetzbar.

Ferner betrifft die Erfindung ein Manipulatorsystem, umfassend einen Manipulators mit sechs unabhängig voneinander ansteuerbaren Freiheitsgraden, und ein oben beschriebenes Bediengerät zum Steuern oder Programmieren des Manipulators.

### 4. Kurze Beschreibung der Zeichnungen

Im Folgenden wird die vorliegende Erfindung unter Bezugnahme auf die beiliegenden Figuren näher beschrieben. In den Figuren sind gleiche Merkmale mit gleichen Bezugszeichen versehen. Dabei zeigt:
Fig. 1 ein Bediengerät gemäß einer Ausführungsform; und
Fig. 2 ein Bediengerät gemäß einer weiteren Ausführungsform.

### 5. Beschreibung bevorzugter Ausführungsbeispiele

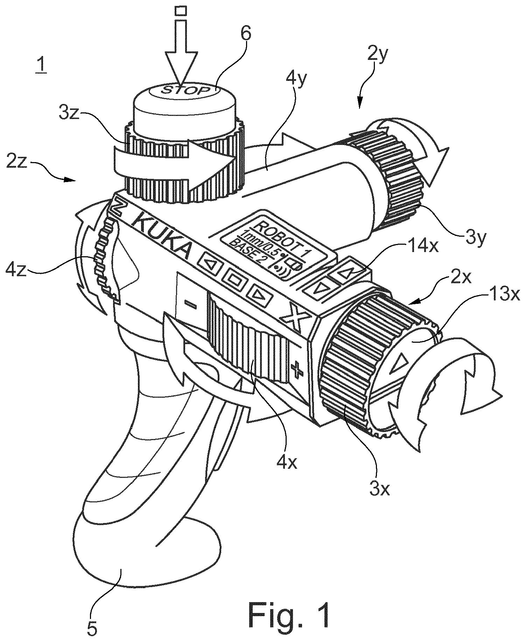

In der Fig. 1 ist ein Bediengerät 1 dargestellt, welches zum Steuern oder Programmieren eines Manipulators 9 gemäß der vorliegenden Erfindung verwendet werden kann. Das Bediengerät 1 umfasst einen Handgriff 5, welcher von einem Bediener gehalten wird. Ferner umfasst das Bediengerät 1 drei Eingabeanordnungen 2x, 2y, 2z, welche entlang der drei Hauptachsen des Bediengeräts 1 ausgerichtet sind. Beispielsweise erstreckt sich die Eingabeanordnung 2x in eine erste Hauptachse nach rechts, und rechtwinklig hierzu erstreckt sich die zweite Eingabeanordnung 2y. Entlang der dritten, hier der vertikalen Hauptachse, ist die dritte Eingabeanordnung 2z angeordnet.

Jede der Eingabeanordnungen 2x, 2y, 2z umfasst ein betätigbares Bewegungsvorgabeelement 4x, 4y, 4z. Diese sind in Form von drehbar betätigbaren Rädern ausgeführt. Wenn beispielsweise das Rad 4x in die Plus-Richtung gedreht wird, verfährt der Manipulator 9 in die positive x-Richtung seines Koordinatensystems. Gleiches gilt für Bewegungen entlang der y- und z-Achse des Manipulators 9, welche durch Betätigung der entsprechenden Räder 4y und 4z gesteuert werden können.

Ferner umfasst jede der Eingabeanordnungen ein drehbar betätigbares Rotationsvorgabeelement 3x, 3y, 3z, welche in Form von drehbar betätigbaren Rädern ausgeführt sind. Durch Drehen des Rades 3x wird beispielsweise eine Rotation des Manipulators 9 um die x-Achse des Koordinatensystems des Manipulators gesteuert. Gleiches gilt für Rotationen um die y- und z-Achse des Manipulators, welche durch Betätigung der Räder 3y und 3z gesteuert werden können. Ferner ist an dem Rotationselement 3z ein Notaus-Schalter 6 bereitgestellt. Dieser ermöglicht es, einen sofortigen Nothalt des Manipulators 9 einzuleiten.

Durch die geometrische Anordnung der Eingabeanordnungen 2x, 2y, 2z erkennt der Bediener sofort, wie mittels des Bediengeräts 1 eine gewünschte Bewegung des Manipulators 9 vorgegeben werden kann. Wenn er eine Rotation des Manipulators 9 um die x-Achse des Manipulators vorgeben möchte, versteht der Bediener sofort aufgrund der Anordnung des Bediengeräts 1, dass das Rad 3x hierfür zu betätigen ist.

Ferner sind an Bediengerät 1 Taster 13x, 14x bereitgestellt. Diese sind in der dargestellten Ausführungsform an der Eingabeanordnung 2x bereitgestellt. Durch Betätigen des Tasters 13x kann die Schrittweite bzw. Sensitivität des drehbar betätigbaren Rotationsvorgabeelements 3x eingestellt werden. Ähnlich kann durch Betätigen des Tasters 14x die Schrittweist bzw. Sensitivität des betätigbaren Bewegungsvorgabeelements 4x eingestellt werden. Auch an den anderen Eingabeanordnungen 2y, 2z können ähnliche Taster bereitgestellt sein (nicht gezeigt), sodass die Sensitivität eines oder mehrere der Bewegungs- bzw. Rotationsvorgabeelemente benutzerspezifisch eingestellt werden kann.

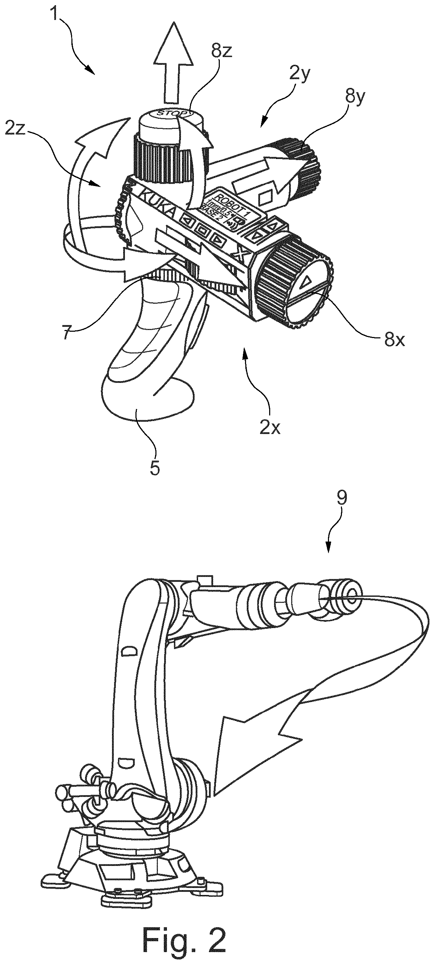

In der Fig. 2 ist ein Bediengerät 1 gemäß einer weiteren Ausführungsform dargestellt, mit welchem die Bewegung eines Manipulators 9 vorgegeben wird. Zwischen dem Handgriff 5 und den Eingabeanordnungen 2x, 2y, 2z ist eine 6D-Sensorvorrichtung 7 bereitgestellt. Wenn die Eingabeanordnungen 2x, 2y, 2z gemeinsam relativ zum Griff 5 bewegt werden, beispielsweise gezogen, gedrückt oder gekippt werden, wird diese Relativbewegung durch die 6D-Sensorvorrichtung 7 erfasst und letztendlich in eine entsprechende Bewegung des Manipulators 9 umgesetzt. Somit können Verfahrbewegungen des Manipulators sehr intuitiv vorgegeben werden.

Die Eingabeanordnungen 2x, 2y, 2z des Bediengeräts 1 der Fig. 2 weisen an ihren Enden Knöpfe 8x, 8y, 8z auf, welche integrale Bewegungs- und Rotationsvorgabeelemente darstellen. Die Knöpfe 8x, 8y, 8z können sowohl gedreht als auch linear bewegt werden. Zum linearen Bewegen können die Knöpfe 8x, 8y, 8z entlang der jeweiligen Hauptachse des Bediengeräts heraus- und hereingeschoben werden, um beispielsweise eine lineare Bewegung des Manipulators 9 entlang der entsprechenden Achse vorzugeben. Durch eine Drehung der Knöpfe 8x, 8y, 8z kann beispielsweise eine Rotation des Manipulators 9 um die entsprechende Achse vorgegeben werden.

### Bezugszeichenliste:

- 1: Bediengerät
- 2x, 2y, 2z: Eingabeanordnungen
- 3x, 3y, 3z: Rotationsvorgabeelemente
- 4x, 4y, 4z: Bewegungsvorgabeelemente
- 5: Handgriff
- 6: Notaus-Schalter
- 7: 6D-Sensorvorrichtung
- 8x, 8y, 8z: Bewegungs- und Rotationsvorgabeelement
- 9: Manipulator
- 13x, 14x: Taster

## Patentansprüche

1. Bediengerät (1) zum Steuern oder Programmieren eines Manipulators (9) mit sechs unabhängig voneinander ansteuerbaren Freiheitsgraden, aufweisend:
Eine erste Eingabeanordnung (2x), welche eingerichtet ist, um eine Bewegung des Manipulators entlang einer x-Achse des Manipulators (9) vorzugeben und um eine Rotation des Manipulators (9) um die x-Achse des Manipulators vorzugeben, wobei die erste Eingabeanordnung (2x) entlang einer ersten Hauptachse des Bediengeräts (1) ausgerichtet ist;
eine zweite Eingabeanordnung (2y), welche eingerichtet ist, um eine Bewegung des Manipulators (9) entlang einer y-Achse des Manipulators (9) vorzugeben und um eine Rotation des Manipulators (9) um die y-Achse des Manipulators (9) vorzugeben, wobei die zweite Eingabeanordnung (2y) entlang einer zweiten Hauptachse des Bediengeräts (1) ausgerichtet ist;
eine dritte Eingabeanordnung (2z), welche eingerichtet ist, um eine Bewegung des Manipulators (9) entlang einer z-Achse des Manipulators (9) vorzugeben und um eine Rotation des Manipulators (9) um die z-Achse des Manipulators (9) vorzugeben, wobei die dritte Eingabeanordnung (2z) entlang einer dritten Hauptachse des Bediengeräts (1) ausgerichtet ist;
wobei die x-Achse, y-Achse und z-Achse des Manipulators (9) orthogonal zueinander sind, und
wobei die Hauptachsen des Bediengeräts (1) im Wesentlichen rechtwinklig zueinander sind und
wobei die erste, zweite und dritte Eingabeanordnung (2x, 2y, 2z) jeweils ein betätigbares Bewegungsvorgabeelement (4x, 4y, 4z, 8x, 8y, 8z) umfasst, welches eingerichtet ist, um die Bewegung des Manipulators (9) vorzugeben, und ein betätigbares Rotationsvorgabeelement (3x, 3y, 3z, 8x, 8y, 8z) umfasst, welches eingerichtet ist, um die Rotation des Manipulators (9) vorzugeben.

2. Bediengerät (1) nach Anspruch 1, wobei die Hauptachsenanordnung des Bediengeräts der x-, y-, und z- Achsenanordnung des Manipulators (9) entspricht.

3. Bediengerät (1) nach Anspruch 1 oder 2, wobei die erste Eingabeanordnung (2x) in einem länglich ausgebildeten ersten Gehäuse bereitgestellt ist, welches sich entlang der ersten Hauptachse des Bediengeräts (1) erstreckt, und
wobei die zweite Eingabeanordnung (2y) in einem länglich ausgebildeten zweiten Gehäuse bereitgestellt ist, welches sich entlang der zweiten Hauptachse des Bediengeräts (1) erstreckt, und
wobei die dritte Eingabeanordnung (2z) in einem länglich ausgebildeten dritten Gehäuse bereitgestellt ist, welches sich entlang der dritten Hauptachse des Bediengeräts (1) erstreckt.

4. Bediengerät (1) nach Anspruch 1, wobei jedes der betätigbaren Bewegungsvorgabeelemente (4x, 4y, 4z) drehbar betätigbar ist.

5. Bediengerät (1) nach Anspruch 1 oder 4, wobei jedes der betätigbaren Rotationsvorgabeelemente (3x, 3y, 3z) drehbar betätigbar ist.

6. Bediengerät (1) nach einem der Ansprüche 1 bis 5, wobei das Bediengerät (1) zwischen einem Fein-Modus und einem Grob-Modus umschaltbar ist, wobei die betätigbaren Bewegungsvorgabeelemente (4x, 4y, 4z) und die betätigbaren Rotationsvorgabeelemente (3x, 3y, 3z) in dem Grob-Modus freilaufend betätigbar sind, und wobei in dem Fein-Modus eine Rasterung der freilaufenden Betätigung entgegenwirkt.

7. Bediengerät (1) nach einem der Ansprüche 1 bis 6, weiter aufweisend einen Handgriff (5), und wobei die erste, zweite und dritte Eingabeanordnung (2x, 2y, 2z) gemeinsam relativ zu dem Handgriff (5) beweglich bereitgestellt sind.

8. Bediengerät (1) nach einem der Ansprüche 1 bis 7, weiter aufweisend einen Handgriff (5), und eine zwischen dem Handgriff (5) und den Eingabeanordnung (2x, 2y, 2z) bereitgestellte 6D-Sensorvorrichtung (7), um eine Relativbewegung zwischen dem Handgriff (5) und einer der Eingabeanordnung (2x, 2y, 2z) zu erfassen.

9. Bediengerät (1) nach einem der Ansprüche 1 bis 8, weiter aufweisend eine 3D-Inertialsensorvorrichtung, um eine absolute Ausrichtung und Orientierung des Bediengeräts (1) bezüglich der Umgebung zu erfassen.

10. Manipulatorsystem, umfassend einen Manipulator (9) mit sechs unabhängig voneinander ansteuerbaren Freiheitsgraden, und ein Bediengerät (1) nach einem der Ansprüche 1 bis 9 zum Steuern oder Programmieren des Manipulators (9).

## Claims

1. Operating device (1) for controlling or programming a manipulator (9) with six independently controllable degrees of freedom, comprising:
A first input arrangement (2x), which is configured to predefine a movement of the manipulator along an x-axis of the manipulator (9) and to predefine a rotation of the manipulator (9) about the x-axis of the manipulator, wherein the first input arrangement (2x) is aligned along a first main axis of the operating device (1);
a second input arrangement (2y) which is configured to predefine a movement of the manipulator (9) along a y-axis of the manipulator (9) and to predefine a rotation of the manipulator (9) about the y-axis of the manipulator (9), wherein the second input arrangement (2y) is aligned along a second main axis of the operating device (1); and
a third input arrangement (2z) which is configured to predefine a movement of the manipulator (9) along a z-axis of the manipulator (9) and to predefine a rotation of the manipulator (9) about the z-axis of the manipulator (9), wherein the third input arrangement (2z) is aligned along a third main axis of the operating device (1) wherein the x-axis, y-axis and z-axis of the manipulator (9) are orthogonal to each other, and
wherein the main axes of the operating device (1) are substantially orthogonal to each other; and
wherein the first, second and third input arrangement (2x, 2y, 2z) each comprises an operable motion predefine element (4x, 4y, 4z, 8x, 8y, 8z) configured to predefine the motion of the manipulator (9), and an operable rotation predefine element (3x, 3y, 3z, 8x, 8y, 8z) configured to predefine the rotation of the manipulator (9).

2. The operating device (1) according to claim 1, wherein the main axis arrangement of the operating device corresponds to the x-, y-, and z- axis arrangement of the manipulator (9).

3. The operating device (1) according to claim 1 or 2, wherein the first input arrangement (2x) is provided in an elongated first housing which extends along the first main axis of the operating device (1), and
wherein the second input arrangement (2y) is provided in an elongated second housing which extends along the second main axis of the operating device (1), and
wherein the third input arrangement (2z) is provided in an elongated third housing extending along the third main axis of the operating device (1).

4. The operating device (1) according to claim 1, wherein each of the operable motion predefine elements (4x, 4y, 4z) is rotatably operable.

5. The operating device (1) according to claim 1 or 4, wherein each of the operable rotation predefine elements (3x, 3y, 3z) is rotatably operable.

6. The operating device (1) according to one of claims 1 to 5, wherein the operating device (1) is switchable between a fine mode and a coarse mode, wherein the operable movement predefine elements (4x, 4y, 4z) and the operable rotation predefine elements (3x, 3y, 3z) are operable in a freewheeling manner in the coarse mode, and wherein in the fine mode a rasterization counteracts the freewheeling operation.

7. The operating device (1) according to one of claims 1 to 6, further comprising a handle (5), and wherein the first, second and third input arrangements (2x, 2y, 2z) are provided together movable relative to the handle (5).

8. The operating device (1) according to one of claims 1 to 7, further comprising a handle (5), and a 6D sensor device (7) provided between the handle (5) and the input arrangements (2x, 2y, 2z) to detect a relative movement between the handle (5) and one of the input arrangements (2x, 2y, 2z).

9. The operating device (1) according to any one of claims 1 to 8, further comprising a 3D inertial sensor device to detect an absolute alignment and orientation of the operating device (1) with respect to the environment.

10. A manipulator system comprising a manipulator (9) with six independently controllable degrees of freedom, and an operating device (1) according to any one of claims 1 to 9 for controlling or programming the manipulator (9).

## Revendications

1. Appareil de manœuvre (1) pour commander ou programmer un manipulateur (9) avec six degrés de liberté commandables indépendamment les uns des autres, comprenant :
un premier agencement d'entrée (2x) qui est agencé pour prescrire un mouvement du manipulateur suivant un axe x du manipulateur (9) et pour prescrire une rotation du manipulateur (9) autour de l'axe x du manipulateur, le premier agencement d'entrée (2x) étant aligné suivant un premier axe principal de l'appareil de manœuvre (1) ;
un deuxième agencement d'entrée (2y) qui est agencé pour prescrire un mouvement du manipulateur (9) suivant un axe y du manipulateur (9) et pour prescrire une rotation du manipulateur (9) autour de l'axe y du manipulateur (9), le deuxième agencement d'entrée (2y) étant aligné suivant un deuxième axe principal de l'appareil de manœuvre (1) ;
un troisième agencement d'entrée (2z) qui est agencé pour prescrire un mouvement du manipulateur (9) suivant un axe z du manipulateur (9) et pour prescrire une rotation du manipulateur (9) autour de l'axe z du manipulateur (9), le troisième agencement d'entrée (2z) étant aligné suivant un troisième axe principal de l'appareil de manœuvre (1) ;
dans lequel l'axe x, l'axe y et l'axe z du manipulateur (9) sont orthogonaux les uns par rapport aux autres, et
dans lequel les axes principaux de l'appareil de manœuvre (1) sont sensiblement perpendiculaires les uns aux autres et
dans lequel les premier, deuxième et troisième agencements d'entrée (2x, 2y, 2z) incluent respectivement un élément de prescription de mouvement actionnable (4x, 4y, 4z, 8x, 8y, 8z), lequel est agencé pour prescrire le mouvement du manipulateur (9), et un élément de prescription de rotation actionnable (3x, 3y, 3z, 8x, 8y, 8z), lequel est agencé pour prescrire la rotation du manipulateur (9).

2. Appareil de manœuvre (1) selon la revendication 1, dans lequel l'agencement des axes principaux de l'appareil de manœuvre correspond à l'agencement des axes x, y et z du manipulateur (9).

3. Appareil de manœuvre (1) selon la revendication 1 ou 2, dans lequel le premier agencement d'entrée (2x) est disposé dans un premier boîtier de configuration allongée qui s'étend suivant le premier axe principal de l'appareil de manœuvre (1), et
dans lequel le deuxième agencement d'entrée (2y) est disposé dans un deuxième boîtier de configuration allongée qui s'étend suivant le deuxième axe principal de l'appareil de manœuvre (1), et
dans lequel le troisième agencement d'entrée (2z) est disposé dans un troisième boîtier de configuration allongée qui s'étend suivant le troisième axe principal de l'appareil de manœuvre (1).

4. Appareil de manœuvre (1) selon la revendication 1, dans lequel chacun des éléments de prescription de mouvement actionnables (4x, 4y, 4z) est actionnable en rotation.

5. Appareil de manœuvre (1) selon la revendication 1 ou 4, dans lequel chacun des éléments de prescription de rotation actionnables (3x, 3y, 3z) est actionnable en rotation.

6. Appareil de manœuvre (1) selon une des revendications 1 à 5, dans lequel l'appareil de manœuvre (1) est commutable entre un mode fin et un mode grossier, les éléments de prescription de mouvement actionnables (4x, 4y, 4z) et les éléments de prescription de rotation actionnables (3x, 3y, 3z) sont actionnables librement dans le mode grossier et, dans le mode fin, un crantage s'oppose à l'actionnement libre.

7. Appareil de manœuvre (1) selon une des revendications 1 à 6, comprenant en outre une poignée (5), et dans lequel les premier, deuxième et troisième agencements d'entrée (2x, 2y, 2z) sont disposés conjointement de manière mobile par rapport à la poignée (5).

8. Appareil de manœuvre (1) selon une des revendications 1 à 7, comprenant en outre une poignée (5) et un dispositif de capteur 6D (7) disposé entre la poignée (5) et l'agencement d'entrée (2x, 2y, 2z) pour détecter un mouvement relatif entre la poignée (5) et un des agencements d'entrée (2x, 2y, 2z).

9. Appareil de manœuvre (1) selon une des revendications 1 à 8, comprenant en outre un dispositif de capteur inertiel 3D pour détecter un alignement et une orientation absolus de l'appareil de manœuvre (1) par rapport à l'environnement.

10. Système de manipulateur incluant un manipulateur (9) comprenant six degrés de liberté commandables indépendamment les uns des autres, et un appareil de manœuvre (1) selon une des revendications 1 à 9 pour commander ou programmer le manipulateur (9).
